# EUROPÄISCHE PATENTANMELDUNG

(11) **EP 4 553 647 A1**
(43) Veröffentlichungstag der Anmeldung: **14.05.2025**
(21) Anmeldenummer: 23209418.5
(22) Anmeldetag: 13.11.2023
(51) Int. Cl.: G06F 8/71, G06F 9/4401, G05B 19/418, G06F 9/445

(54) **VERFAHREN ZUR VERWALTUNG VON ASSETS IN EINEM HETEROGENEN UMFELD, COMPUTERPROGRAMMPRODUKT UND VORRICHTUNG**

(71) Anmelder: Siemens Aktiengesellschaft, 80333 München (DE)
(72) Erfinder: Abdul Khader, Safiya Fathima, 40476 Düsseldorf (DE); Birk, Gunther, 91054 Erlangen/Buckenhof (DE); Cirujano Cuesta, Silvano, 81541 München (DE); Schabert, Heiko, 91052 Erlangen (DE); Shinghal, Swati, 110017 New Delhi (IN); Tacke, Dominik, 90562 Heroldsberg (DE); Volevach, Vitaliy, 90763 Fürth (DE); Wolter, Frank, 91052 Erlangen (DE)
(74) Vertreter: Siemens Patent Attorneys

(57) **Zusammenfassung**

Das Management einer OT-Flotte konfrontiert den Betreiber und die jeweiligen Servicetechniker mit der hohen Komplexität der heterogenen Umgebung, sie müssen sich, basierend auf den eingesetzten Anlagen und Geräten, und mit einer Vielzahl von Werkzeugen zur Ver- und Bearbeitung der Informationen auseinandersetzen.

Die Erfindung betrifft daher ein Verfahren zur Verwaltung von Assets in einem heterogenen Umfeld in einer Anlage erfolgt durch einen Artefakt-Management-Dienst Server, wobei Informationen zu den Assets als Artefakt in zumindest einem Register gespeichert werden. Die Informationen enthalten
- Das Software Artefakt mit den paketierten Binärinhalten,
- einen Artefakt-Manifest Bestandteil (11) zur Beschreibung des Inhalts und der Abhängigkeiten des Artefakts, also das Paket inkl. Formatierung in dem die Metadaten drin sind und
- einen Metadaten Bestandteil (12) mit normalisierten Beschreibungs-Informationen zu dem Artefakt

## Beschreibung

OT bzw. Operational Technology (zu Deutsch: operative Technologie) bezeichnet die Verwendung von Hardware und Software zur Kontrolle von industriellem Equipment. OT umfasst im Folgenden insbesondere Systeme, die zum Beispiel in Industrieanlagen, in der Fertigung, im Energiesektor, in der Medizin, in der Bautechnik und in anderen Branchen verwendet werden. OT stellt dabei einen Gegensatz zur IT (Informationstechnologie) dar, die für Datensysteme zuständig ist. Viele Aspekte von OT und IT überschneiden sich allerdings, da OT-Systeme in der Regel mit Software betrieben werden, mit Netzwerken verbunden sind und immer größere Datenmengen generieren und verwenden.

Die Verwaltung einer Menge von OT-Systemen in einer Industrieanlage konfrontiert den Betreiber und die jeweiligen Servicetechniker mit der hohen Komplexität in der heterogenen Umgebung. Dies rührt insbesondere daher, dass in einer solchen Anlage üblicherweise Geräte und Software von unterschiedlichen Herstellern, aus verschiedenen Geräte-Generationen und zu unterschiedlichsten Anwendungszwecken verwendet werden.

Betreiber und Servicetechniker von OT-Umgebungen müssen sich, basierend auf den eingesetzten Geräten und Software daher auch mit einer Vielzahl unterschiedlicher Werkzeuge auseinandersetzen.

Daneben steht eine Vielzahl von Informationsquellen zur Abfrage zur Verfügung, um die für Administration und Wartung notwendigen Daten zu sammeln und zu verwalten.

Unter einem Software Artefakt (im Folgenden "Artefakt") versteht man ein Software Element, das während des Entwicklungsprozesses produziert und für den Einsatz in der Anlage vorgesehen wurde, beispielsweise eine Betriebssoftware für ein OT Asset / Feldgerät, ein Datenmodell, Prototyp, Workflow-Diagramm, Designdokument oder Setup-Script. Die Verteilung von den sogenannten Artefakten erfolgt je nach Hersteller oder Anbieter des OT Assets auf unterschiedliche Art und Weise.

Die Abhängigkeitsverwaltung der Artefakte muss bislang manuell durchgeführt werden, da Informationen zu Abhängigkeiten nicht in einem gängigen, maschinenlesbaren Format bereitgestellt werden. Unter Abhängigkeiten fallen beispielsweise die richtigen Versionen, Schnittstellen, und vor allem die gegenseitige Verwendung von Artefakten.

Bei der Verteilung von Artefakten (Firmware, BIOS usw.) in heterogene Umgebungen müssen noch weitere, nicht-funktionale Anforderungen berücksichtigt werden. Das ist zum Beispiel der Fall, wenn Geräte vor bestimmten Aktionen in einen festgelegten (sicheren) Zustand versetzt werden müssen oder wenn für das Durchfuhren von Softwareaktualisierungen eine vorbestimmte Reihenfolge einzuhalten ist.

Wartung und technischer Service in einer Anlage müssen heute daher mit einer Vielzahl von unterschiedlichen Informationen umgehen. Das Bedien- und Wartungs-Personal ist dafür verantwortlich, passende Artefakte mit verschiedenen Werkzeugen zu finden, abzugleichen und auf die OT-Infrastruktur anzuwenden. Betriebssystemspezifische Dienste gibt es beispielsweise für Standard-Betriebssysteme, wie MS WINDOWS.

Bislang gibt es keinen umfassenden Ansatz, um das oben beschriebene Problem hersteller- und gerätefamilienübergreifend zu lösen. In der Regel werden neuere Versionen von bestimmten Engineering-Tools unter Verwendung von hersteller- und gerätespezifischen Informationen und Vertriebskanäle verteilt und installiert.

Bekannt sind bereits sogenannte Container-Registries (z. B. von der Software "Docker"), mit hier unterstützenden Funktionalitäten. Die Container-Technologie vereinfacht die Bereitstellung von Anwendungen, weil sich Container, die alle nötigen Pakete enthalten, leicht als Dateien transportieren und installieren lassen. Container gewährleisten die Trennung und Verwaltung der auf einem Rechner genutzten Ressourcen. Das umfasst in der Regel den Code, ein Laufzeitmodul, Systemwerkzeuge und Systembibliotheken - alles was auf einer Hardware installiert werden kann.

Diese Technologien auf die OT Umgebungen anzuwenden und sie hersteller- und gerätefamilienübergreifend nutzbar zu machen, ist derzeit nicht möglich. OT Feldgeräte sind häufig deutlich länger im Einsatz (teilweise mehrere Jahrzehnte, je nach Art des Geräts), so dass eine solche moderne IT Umgebung dort nicht unterstützt wird.

Es ist daher die Aufgabe, eine Lösung anzugeben für das oben beschriebene Problem. Dabei soll eine einheitliche Verwaltung angeboten werden, welche auf OT-Umgebungen angewendet wird und herstellerübergreifenden und Gerätefamilien nutzbar zu machen.

Die Aufgabe wird gelöst durch ein Verfahren gemäß den Merkmalen des unabhängigen Patentanspruchs 1 und durch ein Computerprogrammprodukt umfassend die Merkmale des Patentanspruchs 8 sowie ein Signal gemäß den Merkmalen des Patentanspruchs 9.

Das Computerimplementierte Verfahren zur Verwaltung von Assets in einem heterogenen Umfeld in einer Anlage erfolgt durch einen Artefakt-Management-Dienst Server (20), wobei Informationen zu den Assets als Artefakt in zumindest einem Register (10, 21) gespeichert werden. Die Informationen enthalten
- Das Software Artefakt mit den paketierten Binärinhalten,
- einen Artefakt-Manifest Bestandteil (11) zur Beschreibung des Inhalts und der Abhängigkeiten des Artefakts, also das Paket inkl. Formatierung in dem die Metadaten drin sind und
- einen Metadaten Bestandteil (12) mit normalisierten Beschreibungs-Informationen zu dem Artefakt

Die Aufgabe wird weiterhin gelöst durch eine Vorrichtung gemäß den Merkmalen des unabhängigen Patentanspruchs 10.

Weitere Ausführungsformen sind durch die Unteransprüche beschrieben.

Der beanspruchte Gegenstand wird in einem konkreten Ausführungsbeispiel im Folgenden auch durch die Figuren erläutert. Dabei zeigt
Figur 1 eine Detaildarstellung von dem erfindungsgemäßen Artefakt-Register, welches lokal oder zentral gehalten werden kann und
Figur 2 eine Gesamtübersicht über das heterogene System.

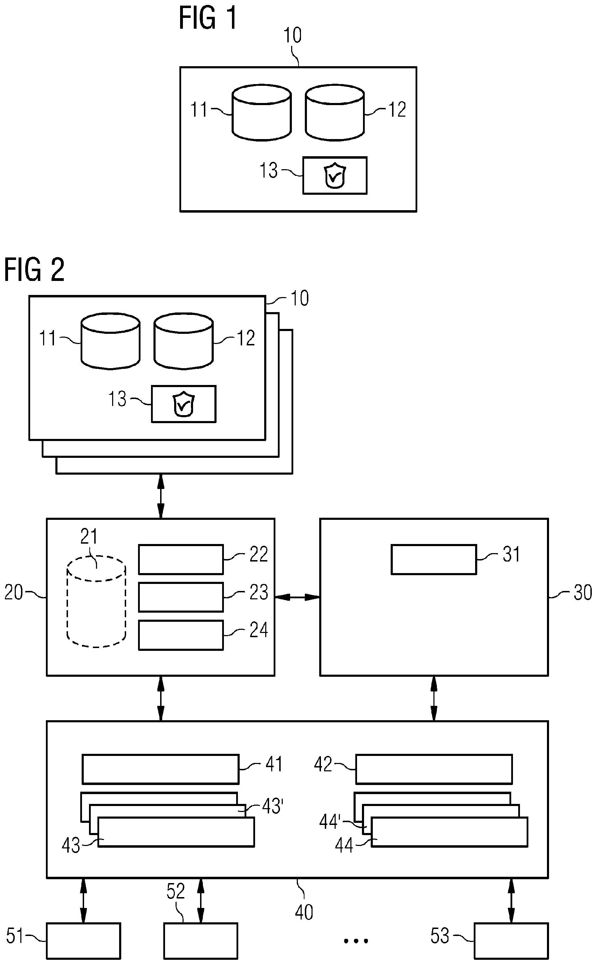

Figur 1 zeigt ein Artefakt-Register 10 (ARTIFACT REGISTRY), von denen beliebig viele (lokal oder auch beispielsweise in einer Cloud) existieren können. Diese werden verwaltet durch ein zentrales Artefakt-Register 21, das es ermöglicht, Artefakte mandanten- und benutzerübergreifend zu teilen, wie im Folgenden beschrieben.

Es wird mit einer herstellerunabhängigen Manifest-Beschreibung 11 pro Artefakt geliefert, die nicht nur die Beschreibung des Artefakts selbst, sondern auch die erforderlichen Hardware- und Softwareabhängigkeiten der Artefakte enthält, also beispielsweise auf welcher Hardware oder Hardwareversion die Software läuft und welche andere Software ggf. benötigt wird (bspw. Treiber). Der Anwender wird durch den Artefakt Management Dienst - Server 20 (ARTIFACT MANAGEMENT SERVICE) dabei unterstützt, die Artefakte mit den vorhandenen Feldgeräten 51, 52, 53 (OT Assets) abzugleichen.

Sogenannte Manifest Dateien wurden beispielsweise von Microsoft in Windows XP eingeführt. Sie enthalten optionale Metadaten zu ihrer zugehörigen EXE-Datei und liegen beispielsweise im XML-Format vor. Das Manifest kann dabei als Ressource in die EXE-Datei eingebunden sein oder als separate Datei existieren.

Darüber hinaus kann die Verteilung von Artefakten zwischen verschiedenen Artefakt-Registern 10 (ARTIFACT REGISTRIES) über den ARTIFACT REGISTRY SERVICE gesteuert werden, so dass mehrere Anbieter ihre Artefakte für eine Vielzahl unterschiedlicher Benutzer bereitstellen und freigeben können. Dabei kann beispielsweise unterschieden werden zwischen
- Einem Kundenbereich - tenant owned,
- Einem zentralen Bereich, der unbegrenzt und offen zugänglich ist - central public, und
- Einem lokalen Bereich - local der jeweils nur lokal zugänglich ist.

Diese verteilten Artefakt-Register 10 können miteinander verknüpft (verschachtelt) werden, um den Gesamtdatenverkehr zu reduzieren. Das bedeutet, dass die Registries aufeinander verweisen können. Das bedeutet, dass ein Siemens Register z. B. 10 Einträge haben kann, 5 davon enthalten aber ein Verweis auf eine anderes Register und der eigentliche Inhalt wird von dort jeweils gezogen.

Der Artefakt Management Dienst-Server (ARTIFACT MANAGEMENT Service) 20, kann mit einer Mehrzahl von lokalen Artefakt-Registern (ARTIFACT REGISTRIES) 10 verbunden werden, die beispielsweise von verschiedenen Anbietern / Herstellern bereitgestellt werden. Diese Artefakt Management Dienst-Server (ARTIFACT MANAGEMENT SERVICES) 20 können mit einer oder mehreren Artefakt-Registern 10 verbunden werden. Es kann seinerseits auch ein lokales Artefakt-Register 21 enthalten.

Ein Artefakt-Register -Dienst 10, kann von verschiedenen Kunden / Nutzern in unterschiedlichen Umgebungen gehostet werden, was es ermöglicht, Artefakte in einem hersteller-/ lieferantenunabhängigen Verpackungs- und Beschreibungsformat zu verwalten.

Ein Artefakt Manifest 11, kann herstellerübergreifend verwendet werden, um den jeweiligen Artefaktinhalt und seine Abhängigkeiten zu beschreiben, Welche Abhängigkeiten die Installation bzw. die Ausführung des bestimmten Artefakts voraussetzt, beispielsweise welche Anforderungen es gibt an die Hardware oder andere Artefakte die schon vorhanden sein müssen.

Verteilung und Verschachtelung von Artefakt-Registern 10 Die Registry ist nicht für eine bestimmte Domäne definiert und kann beispielhaft z.B. BIOS für einen PC, Betriebssystem, Applikation, SPS-Update ...

Das passende Artefakt-Register 10, 21 ist eine Angabe, die es erlaubt (zum Schutz der Artefaktintegrität), Artefaktmanifeste, Artefaktverteilung, Register-Vertrauen und Methoden zu modellieren. Das Artefakt-Register kann problemlos auf verschiedenen Technologien (z. B. Open Container Initiative OCI-Registry) von verschiedenen Anbietern gehostet werden. Diese offene Technologie ermöglicht es, Artefakte mandantenübergreifend zu definieren und zu verteilen.

Der Inventarisierungs-Server (INVENTORY SERVICE) 30 stellt eine Liste der verfügbaren Feldgeräte (OT-Inventar, Hardware und Software) mit normalisierten Metadaten zur Verfügung. Das Durchsuchen, Ansehen, Auswählen und Anfordern der Assets ist durch entsprechende Dienste 31 möglich.

Diese Metadaten ermöglichen die Identifizierung
- des Anbieters,
- der Geräte-/Asset-Familie,
- des Typs,
- der Version(en) und
- der Instanzinformationen, ist die spezielle Geräte- Seriennummer, Konfiguration und ggf. Zertifikat, falls benötigt.

Der Artefakt Management Dienst - Server 20 (ARTIFACT MANAGEMENT SERVICE) ist eine Komponente, die es Betreibern von Anlagen und Diensten ermöglicht, ihre OT-Flotte (Assets, Feldgeräte, Sensoren, Aktoren, ...) über die verteilten Artefakt-Register 10 (ARTIFACT REGISTRIES) zu verwalten.

Die vorhandenen Register (lokal 21 und verteilt 10) können so an sich verwaltet werden - darunter fällt auch die Hinzunahme weiterer Artefakt-Register, wenn benötigt.

Darüber hinaus werden dem Benutzer Informationen zu den vorhandenen Artefakten angeboten, über Dienste 23, mit folgenden Funktionalitäten:
- Durchsuchen / Browse
- Ansehen / View
- Auswählen / Select
- Anfordern / Order
der Artefakte.

Er bietet weiterhin Lebenszyklus-Management-Funktionen 24 wie
- Bereitstellung von Artefakten / Deployment
- Aktualisierung von Artefakten / Update,
- Rekonfiguration
- usw. für den Betreiber der Feldgeräte (Assets) 51, 52, 53.

Aufgrund normalisierter Beschreibungsformate der Inventarmetadaten und der Artefakt-Manifeste benachrichtigt der Management Dienst - Server 20 den Nutzer bzw. Betreiber automatisch über verfügbare Updates und unterstützt die Verwaltung von Abhängigkeiten.

Darüber hinaus stellt der Operator-Administrator die Verbindung zu vertrauenswürdigen Artefakt Registern 10 her, sofern benötigt.

Zur Verbindung der Feldgeräte mit dem Artefakt Management Dienst - Server 20 wird eine Feld-Management- Gateway-Software 40 zur Verfügung gestellt, die beispielsweise vor Ort, also in einer Anlage, gehostet werden kann, um Informationen und Wartungsfunktionen an einen Backend-Dienst weiterzuleiten. Die Kommunikation zwischen dem (Asset) Feld-Management- Gateway und dem Backend-Dienst wird mit Firewallfreundlichen Protokollen hergestellt.

Das Feld-Management- Gateway 40 stellt, allgemein gesagt, die Brücke zur Kommunikation zwischen mehreren internen oder auch externen Netzwerkabschnitten dar. Das hier verwendete Feld-Management- Gateway 40 (FIELD MANAGEMENT GATEWAY) ist das Bindeglied zwischen den beiden zuvor beschriebenen Elementen Artefakt Management Dienst - Server 20, Inventarisierung - Server 30 und den Feldgeräten 51, 52, 53 vor Ort.

Das Feld-Management- Gateway 40 enthält die folgenden Funktionalitäten:
- Artefakt Management Client 41, welcher mit dem Artefakt Management Server 20 kommuniziert
- Inventarisierungs - Client 42, welcher mit dem Inventarisierungs - Server 30 kommuniziert
- Zumindest ein Asset Treiber-SW - Management 43, 43`
- Zumindest eine Asset Treiber-SW - Information 44, 44` pro vorhandenem Asset / Feldgerätetyp.

Treiber sind Computerprogramme oder Softwaremodule, die Interaktion mit angeschlossenen, eingebauten (Hardware) oder virtuellen Geräten steuern. Dazu kommuniziert der Treiber auf der einen Seite meist direkt mit dem Gerät und tauscht Steuersignale und Daten mit dem Gerät aus. Auf der anderen Seite bietet der Treiber dem Betriebssystem und/oder der Anwendungssoftware eine genormte Schnittstelle, damit dieses konkrete Gerät auf gleiche Weise angesprochen werden kann wie gleichartige Geräte anderer Hersteller.

Das Feld-Management- Gateway 40 bietet daher eine geeignete Schnittstelle, um Asset Links zu verbinden. Dies kann über Geräte-Grenzen verteilt (indirekt verwaltet) oder vollständig in das native verwaltete Gerät integriert sein.

Eine Artefakt Liste kann beispielsweise als Tabelle gestaltet sein und folgende Informationen zu den verwalteten Assets enthalten:
- Asset Name
- Asset Typ (z. B. Gateway)
- Hersteller
- Netzadresse (IP, MAC, ...)
- Serien Nummer
- Version (Firmware, Hardware, ...)
- Sicherheit (Schlüssel, Passwort, ...)
- Instanz
- Status
- Kunde (Tenant)

### Bezugszeichenliste

- 10: Artefakt-Register, verteilt (Artifact Registry)
- 11: Artefakt Manifest
- 12: Metadaten
- 13: Sicherheit (Security)

- 20: Artefakt Management Dienst - Server
- 21: Artefakt-Register, zentral/lokal
- 22: Register-Verwaltung
- 23: Artefakt Informationsdienste
- 24: Lebenszyklus-Managemente Dienste für Artefakte von Assets

- 30: Inventarisierung - Server
- 31: Dienste zum Durchsuchen, Ansehen, Auswählen, bestellen von Assets

- 40: Feld-Management- Gateway / Asset
- 41: Artefakt Management Client
- 42: Inventarisierung - Client
- 43, 43': Asset Treiber-SW - Management
- 44, 44': Asset Treiber-SW - Information

- 51 - 53: Feldgerät, OT Asset

## Patentansprüche

1. Computerimplementiertes Verfahren zur Verwaltung von Assets (51, 52, 53) in einem heterogenen Umfeld in einer Anlage durch einen Artefakt-Management-Dienst Server (20), wobei Informationen zu den Assets als Artefakt in zumindest einem Register (10, 21) gespeichert werden, wobei
die Informationen enthalten
- einen Artefakt-Manifest Bestandteil (11) zur Beschreibung des Inhalts und der Abhängigkeiten des Artefakts und
- einen Metadaten Bestandteil (12) mit normalisierten Informationen zu dem Artefakt
und die Informationen bearbeit- und auswertbar sind durch geeignete Dienste (22, 23) und Funktionen (24).

2. Computerimplementiertes Verfahren gemäß Patentanspruch 1,
**dadurch gekennzeichnet, dass**
die Speicherung der Artefakte zentral (21) in dem Artefakt-Management-Dienst Server (20) erfolgt.

3. Computerimplementiertes Verfahren gemäß Patentanspruch 1 oder 2, **dadurch gekennzeichnet, dass**
die Speicherung der Artefakte dezentral (10) ein zumindest einem Artefakt Register (10) erfolgt.

4. Computerimplementiertes Verfahren gemäß einem der vorherigen Patentansprüche, **dadurch gekennzeichnet, dass** der Zugriff auf die Informationen (11, 12) zu den Assets (51, 52, 53) nur selektiv gestattet werden, insbesondere Herstellerabhängig oder Kundenabhängig.

5. Computerimplementiertes Verfahren gemäß einem der vorherigen Patentansprüche, **dadurch gekennzeichnet, dass** die Zugriffsteuerung durch einen separaten Inventarisierungs-Server (30) mit Funktionen (31) durchgeführt wird.

6. Computerimplementiertes Verfahren gemäß einem der vorherigen Patentansprüche, **dadurch gekennzeichnet, dass** Änderungen in den Informationen (11, 12) zu den Assets (51, 52, 53) durch einen Benachrichtigungsdienst an als Push Dienst verteilt werden.

7. Computerimplementiertes Verfahren gemäß einem der vorherigen Patentansprüche, **dadurch gekennzeichnet, dass** der Zugriff auf die Informationen (11, 12) durch geeignete Security Maßnahmen (13) geschützt wird.

8. Computerimplementiertes Verfahren gemäß einem der vorherigen Patentansprüche, **dadurch gekennzeichnet, dass** der Zugriff von dem Artefakt-Management-Dienst Server (20) und von dem Inventarisierungs-Server (30) auf die Assets (51, 52, 53) über ein Gateway (40) erfolgt, welches insbesondere auch Zusatzinformationen zu Asset-Treibern umfasst.

9. Computerprogrammprodukt geeignet und eingerichtet zur Durchführung eines Verfahrens gemäß den Merkmalen eines der Patentansprüchen 1 bis 8.

10. Signal geeignet und eingerichtet zur Übertragung eines Verfahrens gemäß den Merkmalen eines der Patentansprüchen 1 bis 8.

11. Vorrichtung (20) zur Verwaltung von Assets (51, 52, 53) in einem heterogenen Umfeld in einer Anlage durch einen Artefakt-Management-Dienst, mit
einem Register (10, 21) zur Speicherung von Informationen zu den Assets als Artefakt wobei
die Informationen
- einen Artefakt-Manifest Bestandteil (11) zur Beschreibung des Inhalts und der Abhängigkeiten des Artefakts und
- einen Metadaten Bestandteil (12) mit normalisierten Informationen zu dem Artefakt,
enthalten und geeignete Dienste (22, 23) und Funktionen (24) zur Bearbeitung und Auswertung der Informationen.

12. Vorrichtung (20) gemäß Patentanspruch 11, **dadurch gekennzeichnet, dass**
der Speicher für die Artefakte zentral (21) in dem Artefakt-Management-Dienst Server (20) ist.

13. Vorrichtung (20) gemäß Patentanspruch 11 oder 12, **dadurch gekennzeichnet, dass**
der Speicher für die Artefakte dezentral in zumindest einem Artefakt Register (10) ist.

14. Vorrichtung (20) gemäß einem der vorherigen Patentansprüche 11 bis 13, **dadurch gekennzeichnet, dass**
der Zugriff auf die Informationen (11, 12) zu den Assets (51, 52, 53) nur selektiv gestattet werden, insbesondere Herstellerabhängig oder Kundenabhängig.

15. Vorrichtung (20) gemäß einem der vorherigen Patentansprüche 11 bis 14, **dadurch gekennzeichnet, dass**
eine Zugriffsteuerung mit Funktionen (31) eines separaten Inventarisierungs-Servers (30) durchgeführt wird.

16. Vorrichtung (20) gemäß einem der vorherigen Patentansprüche 11 bis 15, **dadurch gekennzeichnet, dass**
ein Benachrichtigungsdienst existiert zur Verteilung von Änderungen in den Informationen (11, 12) zu den Assets (51, 52, 53) als Push Dienst.

17. Vorrichtung (20) gemäß einem der vorherigen Patentansprüche 11 bis 16, **dadurch gekennzeichnet, dass**
der Zugriff auf die Informationen (11, 12) zu den Assets durch geeignete Security Maßnahmen (13) geschützt wird.

18. Vorrichtung (20) gemäß einem der vorherigen Patentansprüche 11 bis 17, **dadurch gekennzeichnet, dass**
der Zugriff von dem Artefakt-Management-Dienst Server (20) und von dem Inventarisierungs-Server (30) auf die Assets (51, 52, 53) über ein Gateway (40) erfolgt, welches insbesondere auch Zusatzinformationen zu Asset-Treibern umfasst.
